# EUROPEAN PATENT APPLICATION

(11) **EP 4 142 387 A1**
(43) Date of publication of application: **01.03.2023**
(21) Application number: 21792757.3
(22) Date of filing: 20.04.2021
(51) Int. Cl.: H04W 68/02

(54) **PAGING RESPONSE METHOD, TERMINAL, AND NETWORK DEVICE**

(30) Priority: 21.04.2020 CN 202010318182
(71) Applicant: Vivo Mobile Communication Co., Ltd., Dongguan, Guangdong 523863 (CN)
(72) Inventor: LIU, Xuanbing, Dongguan, Guangdong 523863 (CN); BAO, Wei, Dongguan, Guangdong 523863 (CN); PU, Wenjuan, Dongguan, Guangdong 523863 (CN); YANG, Xiaodong, Dongguan, Guangdong 523863 (CN)
(74) Representative: Raffay & Fleck
(86) International application number: PCT/CN2021/088381
(87) International publication number: WO 2021/213381

(57) **Abstract**

The present invention provides a paging response method, a terminal, and a network device. The paging response method comprises: in the case of determining not to respond to a paging message, sending an indication message, the indication message being used for indicating not to respond to the paging message.

## Description

### CROSS-REFERENCE TO RELATED APPLICATIONS

This application claims priority to Chinese Patent Application No. 202010318182.2 filed in China on April 21, 2020, which is incorporated herein by reference in its entirety.

### TECHNICAL FIELD

The present invention relates to the field of communications technologies, and in particular, to a paging response method, a terminal, and a network device.

### BACKGROUND

In a multi-card terminal, if one subscriber identity module (Subscriber Identity Module, SIM) card in the multi-card terminal already has a higher priority task (such as a voice call service) in progress, and another SIM card may not be able to respond to paging after receiving a paging message. In this case, a network device is not sure whether the SIM card has received the paging, and may continue to page the SIM card, thereby causing a waste of network resources.

### SUMMARY

Embodiments of the present invention provide a paging response method, a terminal and a network device, to resolve the problem that when a multi-card terminal is busy and cannot respond to paging, the network device may continue to page the terminal, thereby causing a waste of resources.

To resolve the foregoing technical problem, the following technical solutions are used in the present invention:

According to a first aspect, an embodiment of the present invention provides a paging response method, applied to first UE included in a terminal and including:
in the case of determining not to respond to a paging message, sending an indication message, where the indication message is used to indicate not to respond to the paging message.

According to a second aspect, an embodiment of the present invention further provides a paging response method, applied to a network device and including:
receiving an indication message of first UE, where the indication message is used to indicate not to respond to a paging message.

According to a third aspect, an embodiment of the present invention further provides a terminal, where the terminal includes first UE, and the first UE includes:
a first sending module, configured to send, in the case of determining not to respond to a paging message, an indication message, where the indication message is used to indicate not to respond to the paging message.

According to a fourth aspect, an embodiment of the present invention further provides a terminal, including: a memory, a processor, and a computer program stored in the memory and executable on the processor, where when the computer program is executed by the processor, steps of the foregoing paging response method are implemented.

According to a fifth aspect, an embodiment of the present invention further provides a network device, including:
a receiving module, configured to receive an indication message of first UE, where the indication message is used to indicate not to respond to a paging message.

According to a sixth aspect, an embodiment of the present invention further provides a network device, including: a memory, a processor, and a computer program stored in the memory and executable on the processor, where when the computer program is executed by the processor, steps of the foregoing paging response method applied to the network device are implemented.

According to a seventh aspect, an embodiment of the present invention further provides a computer-readable storage medium. The computer-readable storage medium stores a computer program, where when the computer program is executed by a processor, steps of the foregoing paging response method applied to a terminal or steps of the foregoing paging response method applied to a network device are implemented.

Beneficial effects of the present invention are as follows:
In the foregoing solution, in the case of determining not to respond to a paging message, an indication message is sent, and the indication message is used to indicate not to respond to the paging message, which may speed up a paging response process when a terminal is busy, reduce delay or interruption of a terminal service, and can reduce sending of a paging message that is not responded to from a network side, thereby avoiding resource waste and helping to reduce system power consumption.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may obtain other accompanying drawings from these accompanying drawings without creative efforts.
FIG. 1 is a structural diagram of a network system to which the embodiments of the present invention may be applied;
FIG. 2 is a first schematic flowchart of a paging response method according to an embodiment of the present invention;
FIG. 3 is a first schematic interaction diagram of a paging response method according to an embodiment of the present invention;
FIG. 4 is a second schematic interaction diagram of a paging response method according to an embodiment of the present invention;
FIG. 5 is a third schematic interaction diagram of a paging response method according to an embodiment of the present invention;
FIG. 6 is a fourth schematic interaction diagram of a paging response method according to an embodiment of the present invention;
FIG. 7 is a fifth schematic interaction diagram of a paging response method according to an embodiment of the present invention;
FIG. 8 is a second schematic flowchart of a paging response method according to an embodiment of the present invention;
FIG. 9 is a schematic diagram of a module of a terminal according to an embodiment of the present invention;
FIG. 10 is a structural block diagram of a terminal according to an embodiment of the present invention;
FIG. 11 is a schematic diagram of a module of a network device according to an embodiment of the present invention; and
FIG. 12 is a structural block diagram of a network device according to an embodiment of the present invention.

### DESCRIPTION OF EMBODIMENTS

Exemplary embodiments of the present invention will be described below in further detail with reference to the accompanying drawings. Although the exemplary embodiments of the present invention are shown in the accompanying drawings, it should be understood that the present invention may be implemented in various forms without being limited to the embodiments described herein. On the contrary, these embodiments are provided to enable a more thorough understanding of the present invention and to fully convey the scope of the present invention to those skilled in the art.

In the specification and claims of this application, the terms "first", "second", and the like are intended to distinguish between similar objects but do not necessarily describe a specific order or sequence. It should be understood that the data termed in such a way is interchangeable in proper circumstances so that the embodiments of this application described herein can be implemented in an order other than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device. "And/or" used in the specification and claims means at least one of the connected objects.

The following description provides examples and does not limit the scope, applicability, or configuration set forth in the claims. Changes may be made to the function and arrangement of discussed elements without deviating from the spirit and scope of the present disclosure. In various examples, various procedures or components may be omitted, replaced, or added appropriately. For example, the described method may be performed according to a sequence different from the described sequence, and various steps may be added, omitted, or combined. In addition, features described with reference to some examples may be combined in other examples.

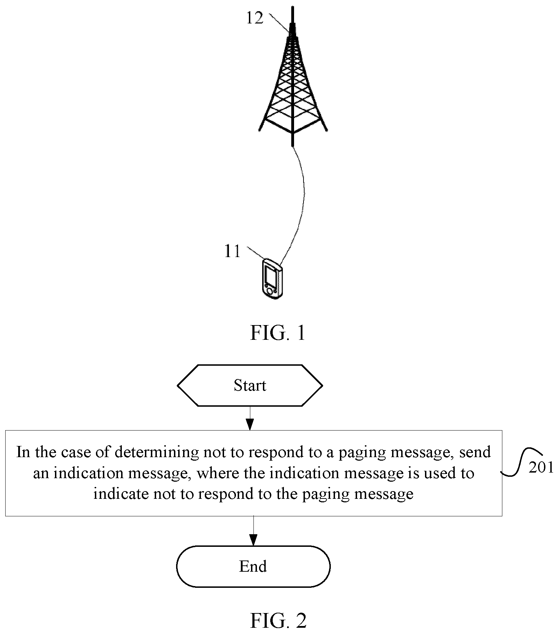

Referring to FIG. 1, FIG. 1 is a block diagram of a wireless communications system to which an embodiment of the present invention may be applied. The wireless communications system includes a terminal 11 and a network device 12. The terminal 11 may also be referred to as a terminal device or user equipment, the terminal 11 includes at least one UE, and the terminal 11 may be a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), a vehicle-mounted device or other terminal side devices. It should be noted that a specific type of the terminal 11 is not limited in the embodiments of the present invention. The network device 12 may be a base station or a core network, where the base station may be a base station of 5G or a later version (for example, a gNB, a 5G NR NB or the like), or a base station in another communications system (for example, an eNB, a WLAN access point, or other access points). The base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a WiFi node, or other appropriate terms in the art. As long as a same technical effect is achieved, the base station is not limited to a specified technical term. It should be noted that, in embodiments of the present invention, only a base station in an NR system is used as an example, but a specific type of the base station is not limited.

To make the objects, technical solutions, and advantages of the present invention clearer, the following describes the present invention in detail in conjunction with the accompanying drawings and specific embodiments.

As shown in FIG. 2, an embodiment of the present invention provides a paging response method, applied to first UE included in a terminal. Optionally, the terminal is a multi-card terminal, and in addition to the first UE, the terminal also includes at least one UE. The paging response method includes the following steps.

Step 201: In the case of determining not to respond to a paging message, send an indication message, where the indication message is used to indicate not to respond the paging message.

The paging message is sent by a network device to the terminal. Optionally, before Step 201, the method further includes: receiving the paging message in an idle or inactive state.

The foregoing multi-card terminal may be capable of using one card for sending and the other for receiving, using one card for sending and both for receiving, and using both cards for sending and receiving. One feature of a multi-card terminal is that it can simultaneously reside on a plurality of networks, but the implementation of the multi-card terminal is different, and some terminals can simultaneously perform sending and receiving on the plurality of networks without affecting each other. When the terminal resides on the plurality of networks simultaneously, a time division method may be used, that is, the terminal resides on a network A for a period of time to listen to paging of the network A, and resides on a network B for another period of time to listen to paging of the network B. Alternatively, the terminal is connected to the network A for a period of time to send and receive data, and receives paging on the network B for another period of time. Alternatively, the terminal receives data on the network A for a period of time, and establishes a connection or send and receive data on the network B for another period of time.

Specifically, according to at least one of an ongoing service and a paging cause, whether to respond to the paging message is determined.

In this embodiment of the present application, the terminal further includes second UE in addition to the first UE, and the ongoing service specifically refers to an ongoing service of the second UE.

A paging cause (paging cause) may be carried in the paging message, and an NR paging cause is used to indicate a cause for paging UE, for example, a VoNR service (namely, a voice call) triggers the paging of the UE. The UE may determine a subsequent action, such as whether to respond to the paging, according to a paging cause value carried in the paging message received from the NR. For example, the terminal is a dual-card terminal, a card 1 is playing a game, in this case, a card 2 receives a paging message, a corresponding paging cause is VoNR, and the terminal may choose to respond to the paging message of the card 2. If the card 2 receives a paging message and a corresponding paging cause value is a short message, the terminal may choose to temporarily ignore the paging message of the card 2, for example, a connection setup is initiated only after the game of the card 1 is over.

In the paging response method in this embodiment of the present invention, in the case of determining not to respond to a paging message, an indication message is sent, and the indication message is used to indicate not to respond to the paging message, which may speed up the paging response process when a terminal is busy, reduce delay or interruption of a terminal service, and can reduce sending of a paging message that is not responded to from a network side, thereby avoiding resource waste and helping to reduce system power consumption.

Further, the indication message is a message including busy indication information or a leaving message.

The busy indication information includes at least one of the following:
a busy indication (Busy Indication);
(one or more) paging causes why the paging message is not responded to;
(one or more) service types for which the paging message is not responded to; and
a duration of not responding to the paging cause or service (Prohibit Timer).

The foregoing Prohibit Timer is used as the duration of the first UE not responding to some paging of a network, and as an implementation method, the first UE determines the duration according to the service being executed by the multi-card terminal.

Before the Prohibit Timer times out, the network stops sending the paging message that is not responded to.

After the Prohibit Timer times out, the network may continue to normally send paging messages of all types and causes.

The leaving message includes at least one of the following:
a busy indication;
a paging cause why the paging message is not responded to;
a service type for which the paging message is not responded to;
a duration of not responding to the paging cause or service;
a leaving cause;
a service type being executed;
a leaving duration (Leaving Timer); and
an identifier of the first UE.

It should be noted that a multi-card terminal includes a plurality of UEs, that is, including UEs corresponding to each SIM in the multi-card terminal.

In a specific embodiment of the present invention, the foregoing indication message may be at least one of a non-access stratum (non-access stratum, NAS) service request message, an NAS registration request message, a tracking area update (Tracking area update, TAU) message, a radio resource control RRC resume request message, an RRC resume request message 1, an RRC resume complete message, an RRC setup request message, and an RRC setup complete message. The foregoing leaving message may be an NAS message or an RRC message.

In Step 201, the sending an indication message includes the following.

An non-access stratum NAS service request message is sent, where the NAS service request message includes the busy indication information.

Alternatively, an NAS registration request message is sent, where the NAS registration request message includes the busy indication information.

Alternatively, a tracking area update TAU message is sent, where the TAU message includes the busy indication information.

Alternatively, at least one of a radio resource control (Radio Resource Control, RRC) resume request (RRC Resume Request) message, an RRC resume request message 1 (RRC Resume Request 1) and an RRC resume complete (RRC Resume Complete) message is sent, where the RRC resume request message, the RRC resume request message 1 or the RRC resume complete message includes at least one of the busy indication information and a specific value of a resume cause, and the specific value of the resume cause (resume cause) indicates that the first UE is busy.

For example, the first UE responds to RAN Paging (base station paging) and/or CN Paging (core network paging) in an inactive state through the RRC Resume Request message. The RRC Resume Request message includes at least one of the following: the busy indication information; and the resume cause indicating that the first UE is busy, such as mt-busy. After receiving the RRC Resume Request message, the network releases the RRC connection with the first UE, and stops sending the paging message that is not responded to.

Alternatively, at least one of an RRC setup request message and an RRC setup complete message is sent, where the RRC setup request message or the RRC setup complete message includes at least one of the busy indication information and a specific value of an establishment cause, and the specific value of the establishment cause (establishment cause) indicates that the first UE is busy.

For example, the RRC Setup Request and/or RRC Setup Complete messages include the busy indication information, which indicates that the paging is not responded to.

The RRC Setup Request message includes at least one of the following information:
busy indication information (Busy Indication); and
an establishment cause indicating that the first UE is busy, such as mt-busy.

The RRC Setup Complete message optionally includes the following information:
busy indication information.

Further, the paging response method further includes:
releasing an RRC connection in a case that a predetermined condition is satisfied.

The predetermined condition includes at least one of the following:
receiving a response message of the indication message;
after the indication message is sent, receiving an RRC connection release message;
after the indication message is sent, receiving an acknowledgment (Acknowledgment, ACK) response of a radio link control (Radio Link Control, RLC) layer corresponding to the indication message;
after the indication message is sent and the ACK response of the RLC layer corresponding to the indication message is received, starting a timer, where the timer times out; and
when the indication message is sent or the indication message is delivered to a lower layer of the RRC, starting a timer, where the timer times out.

It is assumed that the multi-card terminal in this embodiment of the present invention includes first UE (UE1) and second UE (UE2), where the UE2 is in a connected state to execute a service, and the UE1 is in an idle or inactive state to receive paging. The paging response method of the present invention will be described below with reference to specific embodiments.

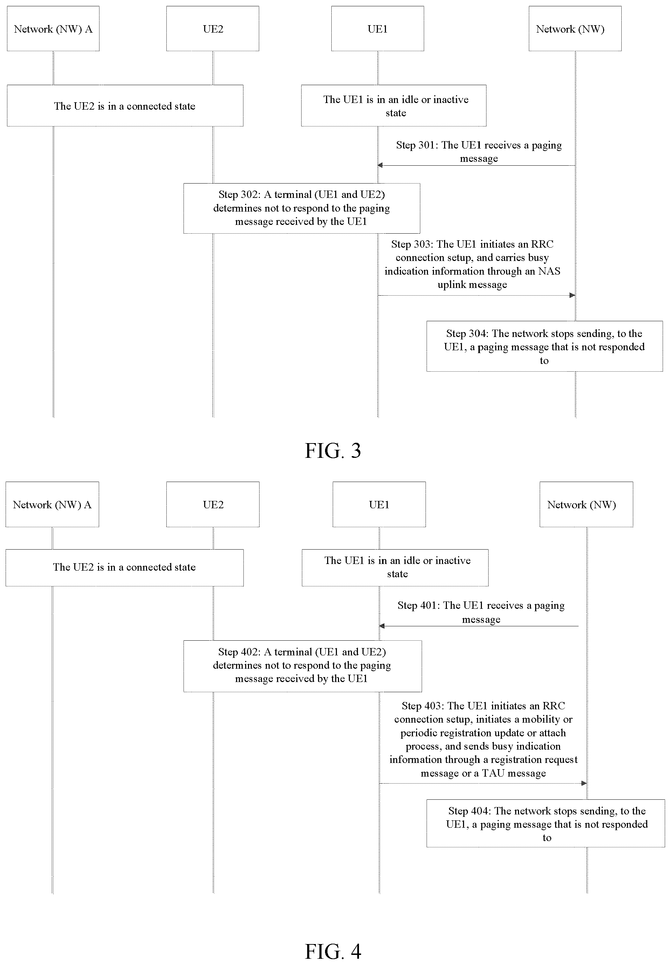

Embodiment 1: As shown in FIG. 3, a paging response method according to an embodiment of the present invention includes the following steps.

Step 301: UE1 receives a paging message.

Step 302: A terminal (UE1 and UE2) determines not to respond to the paging message received by the UE1.

For example, the UE2 is executing a voice call service, a paging cause why the terminal cannot respond to the UE1 is voice or data or another service paging, and the terminal determines to send busy indication information.

Step 303: The UE1 initiates an RRC connection setup, and carries the busy indication information through an NAS uplink message.

The NAS uplink message specifically is an NAS service request (Service Request) message.

The NAS Service Request message includes but is not limited to one or more of the following information:
a busy indication (Busy Indication);
a paging cause not responded to (Paging Cause) or a cause list;
a service type not responded to (Service Type); and
a duration of not responding to the paging cause or service (Prohibit Timer).

Step 304: A network stops sending, to the UE1, a paging message that is not responded to.

Optionally, the network continues to normally send the paging message after the Prohibit Timer times out according to the Prohibit Timer indicated by the UE1.

After receiving the indication message, the network sends a response message to the UE 1.

Optionally, an N2 message carrying an NAS feedback message carries a release indication, where the release indication is used to indicate that a network device (gNB) releases the RRC connection with the UE1. After sending a corresponding NAS message (the response message) to the UE according to the NAS feedback message, the gNB releases the RRC connection with the UE1 according to the indication.

Embodiment 2: As shown in FIG. 4, a paging response method according to an embodiment of the present invention includes the following steps.

Step 401: UE1 receives a paging message.

Step 402: A terminal (UE1 and UE2) determines not to respond to the paging message received by the UE1.

Specifically, the terminal evaluates a priority of each UE service:
a paging cause carried in the paging message received by the UE1; and
a service being executed by the UE2.

For example, the UE2 is executing a voice call service, a paging cause why the terminal cannot respond to the UE1 is voice or data or another service paging, and the terminal determines to send a busy indication.

Step 403: The UE1 initiates an RRC connection setup, initiates a mobility or periodic registration update (Registration Request) or attach (Attach, TAU) process, and sends the busy indication (Busy Indication) information through a registration request message (Registration Request) or a TAU message.

An NAS message such as the Registration Request or the TAU message carries busy indication (Busy Indication) information, including but not limited to:
a busy indication (Busy Indication);
a paging cause not responded to (Paging Cause);
a service type not responded to (Service Type); and
a duration of not responding to the paging cause or service (Prohibit Timer).

Step 404: A network stops sending, to the UE1, a paging message that is not responded to.

Optionally, the network continues to normally send the paging message after the Prohibit Timer times out according to the Prohibit Timer indicated by the UE.

After receiving the indication message, the network sends a response message to the UE 1.

Optionally, an N2 message carrying an NAS feedback message carries a release indication, where the release indication is used to indicate that a network device (gNB) releases the RRC connection with the UE1. After sending a corresponding NAS message (the response message) to the UE1 according to the NAS feedback message, the gNB releases the RRC connection with the UE1 according to the indication.

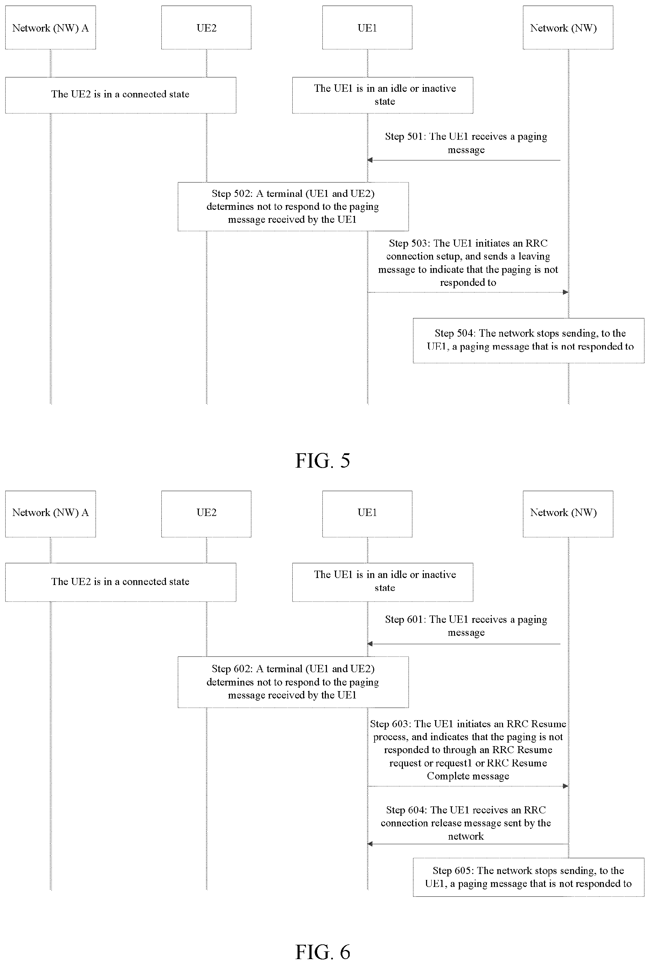

Embodiment 3: As shown in FIG. 5, a paging response method according to an embodiment of the present invention includes the following steps.

Step 501: UE1 receives a paging message.

Step 502: A terminal (UE1 and UE2) determines not to respond to the paging message received by the UE1.

Specifically, the terminal evaluates a priority of each UE service:
a paging cause carried in the paging message received by the UE1; and
a service being executed by the UE2.

For example, the UE2 is executing a voice call service, a paging cause why the terminal cannot respond to the UE1 is voice or data or another service paging, and the terminal determines to send a leaving message (Leaving Notification) to indicate that the paging is not responded to.

Step 503: The UE1 initiates an RRC connection setup, and sends the leaving message to indicate that the paging is not responded to.

The leaving message may be an NAS message or an RRC message.

The leaving message includes at least one of the following information:
a busy indication (Busy Indication);
a paging cause not responded to;
a service type not responded to;
a duration of not responding to the paging cause or service (Prohibit Timer);
a leaving cause;
a service type being executed;
a leaving duration (Leaving Timer); and
a UE1 ID, such as 5G-S-TMSI or I-RNTI.

Specifically, after AS security is activated, the UE1 sends a leaving message.

Step 504: A network stops sending, to the UE1, a paging message that is not responded to.

Optionally, the network stops paging the UE1 during running of the Leaving Timer indicated by the UE1, continues to normally send the paging message after the Leaving Timer times out, or continues to normally send the paging message after the UE1 is reconnected to the network.

After Step 504, the method according to the present invention further includes: The UE1 releases the connection.

As an optional implementation for the UE1 releasing the connection:

The UE1 releases the RRC connection when specific conditions are satisfied. The specific conditions are:
the UE1 receives a response message of the RRC leaving message;
after the RRC leaving message is sent, the UE1 receives an ACK response of an RLC layer corresponding to the message;
after the RRC leaving message is sent and the ACK response of the RLC layer corresponding to the message is received, the UE1 starts a timer, where the timer times out; and
when the RRC leaving message is sent or the RRC leaving message is delivered to a lower layer of the RRC, the UE1 starts a timer, where the timer times out.

Embodiment 4: As shown in FIG. 6, a paging response method according to an embodiment of the present invention includes the following steps.

Step 601: UE1 receives a paging message.

Step 602: A terminal (UE1 and UE2) determines not to respond to the paging message received by the UE1.

For example, the UE2 is executing a voice call service, a paging cause why the terminal cannot respond to the UE1 is voice or data or another service paging, and the terminal determines to send an RRC resume message to indicate that the paging is not responded to.

Step 603: The UE1 initiates an RRC Resume process, and indicates that the paging is not responded to through an RRC Resume request or request 1 or RRC Resume Complete message.

The RRC Resume request/request 1/Complete message includes at least one of the following information:
a resume cause indicating that the UE1 is busy, such as mt-busy;
a busy indication (Busy Indication);
a paging cause not responded to;
a service type not responded to; and
a duration of not responding to the paging cause or service (Prohibit Timer).

Step 604: The UE1 receives an RRC connection release message sent by a network;

Step 605: The network stops sending, to the UE1, a paging message that is not responded to.

Optionally, the network continues to normally send the paging message after the Prohibit Timer times out according to the Prohibit Timer indicated by the UE1.

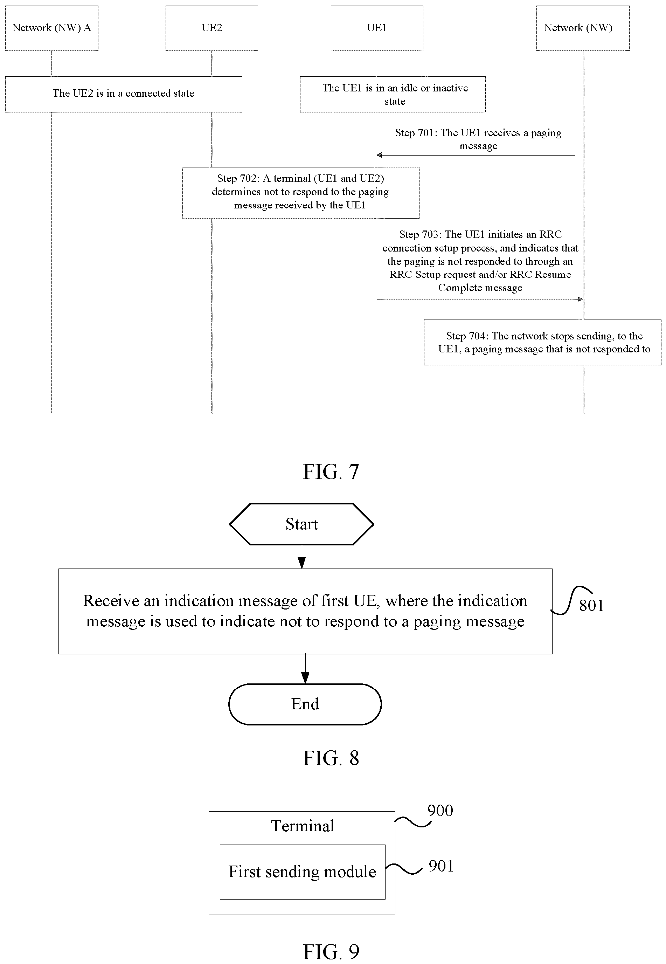

Embodiment 5: As shown in FIG. 7, a paging response method according to an embodiment of the present invention includes the following steps.

Step 701: UE1 receives a paging message.

Step 702: A terminal (UE1 and UE2) determines not to respond to the paging message received by the UE1.

For example, the UE2 is executing a voice call service, a paging cause why the terminal cannot respond to the UE1 is voice or data or another service paging, and the terminal determines to send an RRC setup message to indicate that the paging is not responded to.

Step 703: The UE1 initiates an RRC connection setup process, and indicates that the paging is not responded to through an RRC Setup request and/or RRC Resume Complete message.

The RRC Setup Request message includes at least one of the following information:
an establishment cause indicating that the UE1 is busy, such as mt-busy;
a busy indication (Busy Indication);
a paging cause not responded to;
a service type not responded to; and
a duration of not responding to the paging cause or service (Prohibit Timer).

The RRC Setup Complete message optionally includes at least one of the following information:
a busy indication (Busy Indication);
a paging cause not responded to;
a service type not responded to; and
a duration of not responding to the paging cause or service (Prohibit Timer).

As an optional implementation, the UE1 sends the RRC Setup request message, which indicates that an MT is busy through the establishment cause, and optionally carries busy indication information; and the UE1 receives a connection release message sent by a network.

As another optional implementation, the UE1 sends the RRC Setup request message, optionally indicating that an MT is busy through the establishment cause; a network sends a connection setup (an RRC Setup); the UE1 sends the RRC Setup Complete message, which carries busy indication information; and the UE1 receives a connection release message sent by the network.

Step 704: The network stops sending, to the UE1, a paging message that is not responded to.

Optionally, the network continues to normally send the paging message after the Prohibit Timer times out according to the Prohibit Timer indicated by the UE1.

In the paging response method in this embodiment of the present invention, in the case of determining not to respond to a paging message, an indication message is sent, and the indication message is used to indicate not to respond to the paging message, which may speed up the paging response process when a terminal is busy, reduce delay or interruption of a terminal service, and can reduce sending of a paging message that is not responded to from a network side, thereby avoiding resource waste and helping to reduce system power consumption.

As shown in FIG. 8, an embodiment of the present invention further provides a paging response method, applied to a network device. The method includes:

Step 801: Receive an indication message of first UE, where the indication message is used to indicate not to respond to a paging message.

The indication message is a message including busy indication information or a leaving message. Before receiving the indication message of the first UE, optionally, the network device sends a paging message to the first UE in an idle or inactive state, and a terminal sends the above indication message when it determines not to respond to the paging message.

The busy indication information includes at least one of the following:
a busy indication;
a paging cause why the paging message is not responded to;
a service type for which the paging message is not responded to; and
a duration of not responding to the paging cause or service.

The leaving message includes at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

Further, after receiving the indication message of the first UE, the method further includes:
stopping sending the paging message to the UE within a preset time.

The paging message is at least one of the following:
a paging message sent by the network device before receiving the indication message; or
a paging message that is indicated by the first UE and is corresponding to a paging cause that is not responded to.

The foregoing preset time is determined according to the leaving duration and/or the duration of not responding to the paging cause or service.

Further, after receiving the indication message of the first UE, the method further includes:
obtaining an NAS feedback message through an N2 message, where the N2 message includes a release indication, and the release indication is used to indicate that the network device releases an RRC connection with the first UE;
sending a response message of the indication message to the first UE according to the NAS feedback message; and releasing the RRC connection with the first UE according to the release indication.

Further, after receiving the indication message of the first UE, the method further includes:
sending an RRC connection release message, and releasing the RRC connection with the first UE.

The paging response method applied to a network device side is corresponding to the foregoing paging response method applied to a terminal side. Specific behaviors of the network device side have been described in detail in the specific embodiments of the terminal side, and details are not described herein again.

The paging response method in this embodiment of the present invention includes receiving an indication message of first UE, where the indication message is used to indicate not to respond to a paging message, so that the network can reduce the sending of the paging message that is not responded to, avoid resource waste, and help to reduce system power consumption.

As shown in FIG. 9, an embodiment of the present invention provides a terminal 900, where the terminal includes first UE, and the first UE includes:
a first sending module 901, configured to send, in the case of determining not to respond to a paging message, an indication message, where the indication message is used to indicate not to respond to the paging message.

In the terminal in this embodiment of the present invention, the indication message is a message including busy indication information or a leaving message.

In the terminal in this embodiment of the present invention, the busy indication information includes at least one of the following:
a busy indication;
a paging cause why the paging message is not responded to;
a service type for which the paging message is not responded to; and
a duration of not responding to the paging cause or service.

In the terminal in this embodiment of the present invention, the leaving message includes at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

In the terminal in this embodiment of the present invention, the first sending module is configured to send a non-access stratum NAS service request message, where the NAS service request message includes the busy indication information;
or send an NAS registration request message, where the NAS registration request message includes the busy indication information;
or send a tracking area update TAU message, where the TAU message includes the busy indication information;
or send at least one of a radio resource control RRC resume request message, an RRC resume request message 1 and an RRC resume complete message, where the RRC resume request message, the RRC resume request message 1 or the RRC resume complete message includes at least one of the busy indication information and a specific value of a resume cause, and the specific value of the resume cause indicates that the first UE is busy;
or send at least one of an RRC setup request message and an RRC setup complete message, where the RRC setup request message or the RRC setup complete message includes at least one of the busy indication information and a specific value of a setup cause, and the specific value of the setup cause indicates that the first UE is busy.

The terminal in this embodiment of the present invention further includes:
a first processing module, configured to release an RRC connection in a case that a predetermined condition is satisfied.

The predetermined condition includes at least one of the following:
receiving a response message of the indication message;
after the indication message is sent, receiving an RRC connection release message;
after the indication message is sent, receiving an acknowledgment ACK response of a radio link control RLC layer corresponding to the indication message;
after the indication message is sent and the ACK response of the RLC layer corresponding to the indication message is received, starting a timer, where the timer times out; and
when the indication message is sent or the indication message is delivered to a lower layer of the RRC, starting a timer, where the timer times out.

The terminal in this embodiment of the present invention further includes:
a determining module, configured to determine, before the first sending module sends the indication message in the case of determining not to respond to the paging message, whether to respond to the paging message according to at least one of an ongoing service and a paging cause.

In the terminal in this embodiment of the present invention, in the case of determining not to respond to a paging message, an indication message is sent, and the indication message is used to indicate not to respond to the paging message, which may speed up the paging response process when a terminal is busy, reduce delay or interruption of a terminal service, and can reduce sending of a paging message that is not responded to from a network side, thereby avoiding resource waste and helping to reduce system power consumption.

It should be noted that this terminal embodiment is a terminal corresponding to the paging response method applied to the terminal. All implementations of the foregoing embodiments are applicable to this terminal embodiment, and a same technical effect can also be achieved.

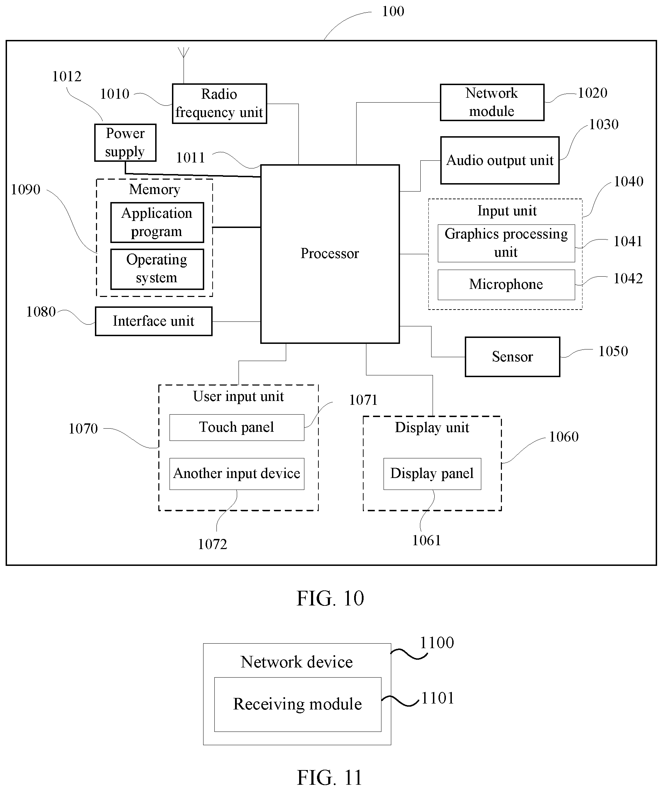

FIG. 10 is a schematic structural diagram of a terminal according to an embodiment of the present invention.

The terminal 100 includes first UE, and the first UE includes but is not limited to, components such as a radio frequency unit 1010, a network module 1020, an audio output unit 1030, an input unit 1040, a sensor 1050, a display unit 1060, a user input unit 1070, an interface unit 1080, a memory 1090, a processor 1011, and a power supply 1012. A person skilled in the art can understand that a structure of the terminal shown in FIG. 10 does not constitute a limitation on the terminal, where the terminal may include more or fewer components than those shown in the figure, or combine some components, or have different component arrangements. In this embodiment of the present invention, the terminal includes but is not limited to a mobile phone, a tablet computer, a laptop computer, a palmtop computer, an in-vehicle terminal, a wearable device, a pedometer, and the like.

In the case of determining not to respond to a paging message, the processor 1011 is configured to send an indication message, where the indication message is used to indicate not to respond to the paging message.

In the terminal in this embodiment of the present invention, in the case of determining not to respond to a paging message, an indication message is sent, and the indication message is used to indicate not to respond to the paging message, which may speed up the paging response process when a terminal is busy, reduce delay or interruption of a terminal service, and can reduce sending of a paging message that is not responded to from a network side, thereby avoiding resource waste and helping to reduce system power consumption.

The terminal in this embodiment of the present invention can implement all implementations in the foregoing embodiments of the paging response method applied to the terminal, and a same technical effect can be achieved. Details are not described again herein.

It should be understood that in this embodiment of the present invention, the radio frequency unit 1010 may be configured to receive and transmit signals in an information receiving and transmitting process or a calling process. Specifically, after downlink data is received from a network side device, the processor 1011 processes the downlink data, and uplink data is transmitted to the network side device. Generally, the radio frequency unit 1010 includes, but is not limited to, an antenna, at least one amplifier, a transceiver, a coupler, a low noise amplifier, and a duplexer. In addition, the radio frequency unit 1010 may communicate with a network and another device through a wireless communications system.

The terminal provides wireless broadband Internet access to a user through the network module 1020, for example, helps the user receive and send e-mails, browse web pages, access streaming media, and the like.

The audio output unit 1030 may convert audio data received by the radio frequency unit 1010 or the network module 1020 or stored in the memory 1090 into an audio signal and output the audio signal as a sound. In addition, the audio output unit 1030 may further provide an audio output (for example, a call signal received voice, or a message received voice) related to a specific function implemented by the terminal 100. The audio output unit 1030 includes a speaker, a buzzer, a telephone receiver, and the like.

The input unit 1040 is configured to receive an audio signal or a video signal. The input unit 1040 may include a graphics processing unit (Graphics Processing Unit, GPU) 1041 and a microphone 1042, and the graphics processing unit 1041 processes image data of a still picture or video obtained by an image capture apparatus (such as a camera) in a video capture mode or an image capture mode. A processed image frame may be displayed on the display unit 1060. The image frame processed by the graphics processing unit 1041 may be stored in the memory 1090 (or another storage medium) or sent by using the radio frequency unit 1010 or the network module 1020. The microphone 1042 may receive a sound and can process such sound into audio data. The processed audio data may be output by being converted into a format that may be transmitted to a mobile communications network side device by using the radio frequency unit 1010 in a telephone call mode.

The terminal 100 further includes at least one sensor 1050, for example, a light sensor, a motion sensor, and another sensor. Specifically, the light sensor includes an ambient light sensor and a proximity sensor. The ambient light sensor may adjust luminance of the display panel 1061 based on brightness of ambient light. The proximity sensor may turn off the display panel 1061 and/or backlight when the terminal 100 is moved to an ear. As a type of the motion sensor, an accelerometer sensor can detect magnitude of acceleration in each direction (generally, on three axes), and may detect magnitude and a direction of gravity when being static. The accelerometer sensor may be used for recognizing a terminal gesture (for example, portrait and landscape orientation switching, a related game, or magnetometer posture calibration), a function related to vibration recognition (for example, a pedometer or a strike), or the like. The sensor 1050 may further include a fingerprint sensor, a pressure sensor, an iris sensor, a molecular sensor, a gyroscope, a barometer, a hygrometer, a thermometer, an infrared sensor, and the like. Details are not described herein.

The display unit 1060 is configured to display information input by a user or information provided for a user. The display unit 1060 may include a display panel 1061. The display panel 1061 may be configured in a form of a liquid crystal display (LCD), an organic light-emitting diode (OLED), or the like.

The user input unit 1070 may be configured to receive input digit or character information and generate key signal input related to user setting and function control of the terminal. Specifically, the user input unit 1070 includes a touch panel 1071 and another input device 1072. The touch panel 1071, also called a touch screen, may collect touch operation on or near the touch panel by users (for example, operation on the touch panel 1071 or near the touch panel 1071 by fingers or any suitable objects or accessories such as a touch pen by the users). The touch panel 1071 may include two parts: a touch detection apparatus and a touch controller. The touch detection apparatus detects a touch location of the user, detects a signal brought by the touch operation, and sends the signal to the touch controller. The touch controller receives touch information from the touch detection apparatus, converts the touch information into touch point coordinates, sends the touch point coordinates to the processor 1011, and receives and executes a command sent by the processor 1011. In addition, the touch panel 1071 may be implemented by using a plurality of types such as a resistive type, a capacitive type, an infrared ray, and a surface acoustic wave. The user input unit 1070 may include other input devices 1072 in addition to the touch panel 1071. Specifically, the another input device 1072 may include but is not limited to: a physical keyboard, a function button (such as a volume control button, a switch button), a trackball, a mouse, and a joystick, which is not described herein.

Further, the touch panel 1071 may cover the display panel 1061. When detecting a touch operation on or near the touch panel 1071, the touch panel 1071 transmits the touch operation to the processor 1011 to determine a type of a touch event. Then, the processor 1011 provides corresponding visual output on the display panel 1061 based on the type of the touch event. In FIG. 10, the touch panel 1071 and the display panel 1061 are used as two independent components to implement input and output functions of the terminal. However, in some embodiments, the touch panel 1071 and the display panel 1061 may be integrated to implement the input and output functions of the terminal. This is not specifically limited herein.

The interface unit 1080 is an interface connecting an external apparatus to the terminal 100. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, a headset port, and the like. The interface unit 1080 may be configured to receive input (for example, data information and power) from the external apparatus and transmit the received input to one or more elements in the terminal 100, or may be configured to transmit data between the terminal 100 and the external apparatus.

The memory 1090 may be configured to store a software program and various data. The memory 1090 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 1090 may include a high-speed random access memory, and may further include a nonvolatile memory, for example, at least one magnetic disk storage device, a flash storage device, or another volatile solid-state storage device.

The processor 1011 is a control center of the terminal, and connects all parts of the entire terminal by using various interfaces and lines. By running or executing a software program and/or a module stored in the memory 1090 and invoking data stored in the memory 1090, the processor performs various functions of the terminal and data processing, to perform overall monitoring on the terminal. Optionally, the processor 1011 may include one or more processing units. Preferably, an application processor and a modem processor may be integrated into the processor 1011. The application processor mainly processes an operating system, a user interface, an application, and the like. The modem processor mainly processes wireless communications. It can be understood that, alternatively, the modem processor may not be integrated into the processor 1011.

The terminal 100 may further include a power supply 1012 (such as a battery) that supplies power to each component. Preferentially, the power supply 1012 may be logically connected to the processor 511 by using a power management system, to implement functions such as charging, discharging, and power consumption management by using the power management system.

In addition, the terminal 100 includes some function modules not shown, and details are not described herein.

Preferably, an embodiment of the present invention further provides a terminal, including a memory, a processor and a computer program stored in the memory and executable on the processor. When the computer program is executed by the processor, each process in the embodiment of the paging response method applied to a terminal side is implemented, and a same technical effect can be achieved. To avoid repetition, details are not described herein.

An embodiment of the present invention further provides a computer-readable storage medium. The computer-readable storage medium stores a computer program. When the computer program is executed by a processor, each process in the embodiment of the paging response method applied to the terminal side is implemented, and a same technical effect can be achieved. To avoid repetition, details are not described herein again. The computer-readable storage medium is, for example, a read-only memory (Read-Only Memory, ROM), a random access memory (Random Access Memory, RAM), a magnetic disk, or an optical disc.

As shown in FIG. 11, an embodiment of the present invention provides a network device 1100, including:
a receiving module 1101, configured to receive an indication message of first UE, where the indication message is used to indicate not to respond to a paging message.

In the network device in this embodiment of the present invention, the indication message is a message including busy indication information or a leaving message.

In the network device in this embodiment of the present invention, the busy indication information includes at least one of the following:
a busy indication;
a paging cause why the paging message is not responded to;
a service type for which the paging message is not responded to; and
a duration of not responding to the paging cause or service.

In the network device in this embodiment of the present invention, the leaving message includes at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

The network device in this embodiment of the present invention further includes:
a second processing module, configured to stop sending the paging message to the first UE within a preset time after the receiving module receives the indication message of the first UE.

The paging message is at least one of the following:
a paging message sent by the network device before receiving the indication message; or
a paging message that is indicated by the first UE and is corresponding to a paging cause that is not responded to.

The network device in this embodiment of the present invention further includes:
an obtaining module, configured to obtain, after the receiving module receives the indication message of the first UE, an NAS feedback message through an N2 message, where the N2 message includes a release indication, and the release indication is used to indicate that the network device releases an RRC connection with the first UE; and
a second processing module, configured to send a response message of the indication message to the first UE according to the NAS feedback message, and release the RRC connection with the first UE according to the release indication.

The network device in this embodiment of the present invention further includes:
a second sending module, configured to send, after the receiving module receives the indication message of the first UE, an RRC connection release message, and release the RRC connection with the first UE.

It should be noted that this network device embodiment provides a network device corresponding to the foregoing paging response method applied to the network device, all implementations in the foregoing embodiments are applicable to this network device embodiment, and a same technical effect thereof can be achieved.

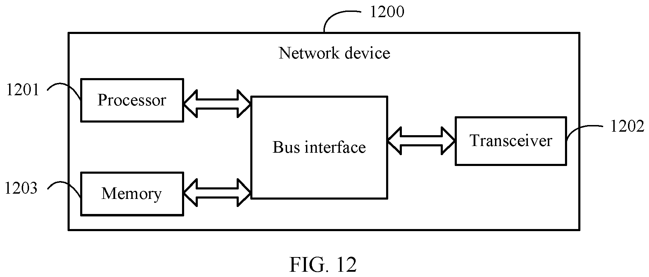

FIG. 12 is a structural diagram of a network device according to an embodiment of the present invention. Details of the foregoing paging response method can be implemented, and a same effect can be achieved. As shown in FIG. 12, the network device 1200 includes a processor 1201, a transceiver 1202, a memory 1203, and a bus interface. The processor 1201 is configured to:
receive an indication message of first UE through the transceiver 1202, where the indication message is used to indicate not to respond to a paging message.

In FIG. 12, a bus architecture may include any quantity of interconnected buses and bridges, and is specifically linked by various circuits of one or more processors represented by the processor 1201 and a memory represented by the memory 1203. The bus architecture may further link various other circuits such as a peripheral device, a voltage regulator, and a power management circuit together. These are all well-known in the art, and therefore are not further described in this specification. The bus interface provides interfaces. The transceiver 1202 may be a plurality of elements, in other words, includes a transmitter and a receiver, and provides a unit configured to communicate with various other apparatuses on a transmission medium.

In FIG. 12, a bus architecture may include any quantity of interconnected buses and bridges, and is specifically linked by various circuits of one or more processors represented by the processor 1201 and a memory represented by the memory 1203. The bus architecture may further link various other circuits such as a peripheral device, a voltage regulator, and a power management circuit together. These are all well-known in the art, and therefore are not further described in this specification. The bus interface provides interfaces. The transceiver 1202 may be a plurality of elements, in other words, includes a transmitter and a receiver, and provides a unit configured to communicate with various other apparatuses on a transmission medium.

The network device in this embodiment of the present invention can implement the foregoing processes of the paging response method embodiment applied to the network device, and a same technical effect can be achieved. To avoid repetition, details are not described herein again.

Preferably, an embodiment of the present invention further provides a network device, including a processor, a memory, and a computer program stored in the memory and executable on the processor. When the computer program is executed by the processor, the foregoing processes of the paging response method embodiment applied to the network device are implemented, and a same technical effect can be achieved. To avoid repetition, details are not described herein again.

An embodiment of the present invention further provides a computer-readable storage medium. The computer-readable storage medium stores a computer program. When the computer program is executed by a processor, each process in the embodiment of the paging response method applied to the network device is implemented, and a same technical effect can be achieved. To avoid repetition, details are not described herein again. The computer readable storage medium may be a read-only memory (Read-Only Memory, ROM), a random access memory (Random Access Memory, RAM), a magnetic disk, an optical disc, or the like.

The network side device may be a base transceiver station (Base Transceiver Station, BTS) in a global system for mobile communications (Global System of Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolved NodeB, eNB or eNodeB), a relay station, or an access point in LTE, or a base station in a future 5G network, or the like. This is not limited herein.

The foregoing embodiments are preferred embodiments of the present invention. It should be noted that, within the technical concept of the present invention, a person of ordinary skill in the art can make various improvements and modifications, which shall all fall within the protection scope of the present invention.

## Claims

1. A paging response method, applied to first UE comprised in a terminal and comprising:
in the case of determining not to respond to a paging message, sending an indication message, wherein the indication message is used to indicate not to respond to the paging message.

2. The method according to claim 1, wherein the indication message is a message comprising busy indication information or a leaving message.

3. The method according to claim 2, wherein the busy indication information comprises at least one of the following:
a busy indication;
a paging cause why the paging message is not responded to;
a service type for which the paging message is not responded to; and
a duration of not responding to the paging cause or service.

4. The method according to claim 2, wherein the leaving message comprises at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

5. The method according to claim 2, wherein the sending an indication message comprises:
sending a non-access stratum NAS service request message, wherein the NAS service request message comprises the busy indication information;
or sending an NAS registration request message, wherein the NAS registration request message comprises the busy indication information;
or sending a tracking area update TAU message, wherein the TAU message comprises the busy indication information;
or sending at least one of a radio resource control RRC resume request message, an RRC resume request message 1 and an RRC resume complete message, wherein the RRC resume request message, the RRC resume request message 1 or the RRC resume complete message comprises at least one of the busy indication information and a specific value of a resume cause, and the specific value of the resume cause indicates that the first UE is busy;
or sending at least one of an RRC setup request message and an RRC setup complete message, wherein the RRC setup request message or the RRC setup complete message comprises at least one of the busy indication information and a specific value of a setup cause, and the specific value of the setup cause indicates that the first UE is busy.

6. The method according to claim 1, further comprising:
releasing an RRC connection in a case that a predetermined condition is satisfied;
wherein the predetermined condition comprises at least one of the following:
receiving a response message of the indication message;
after the indication message is sent, receiving an RRC connection release message;
after the indication message is sent, receiving an acknowledgment ACK response of a radio link control RLC layer corresponding to the indication message;
after the indication message is sent and the ACK response of the RLC layer corresponding to the indication message is received, starting a timer, wherein the timer times out; and
when the indication message is sent or the indication message is delivered to a lower layer of the RRC, starting a timer, wherein the timer times out.

7. The method according to claim 1, wherein before the sending an indication message in the case of determining not to respond to a paging message, the method further comprises:
determining, according to at least one of an ongoing service and a paging cause, whether to respond to the paging message.

8. A paging response method, applied to a network device and comprising:
receiving an indication message of first UE, wherein the indication message is used to indicate not to respond to a paging message.

9. The method according to claim 8, wherein the indication message is a message comprising busy indication information or a leaving message.

10. The method according to claim 9, wherein the busy indication information comprises at least one of the following:
a busy indication;
a paging cause why the paging message is not responded to;
a service type for which the paging message is not responded to; and
a duration of not responding to the paging cause or service.

11. The method according to claim 9, wherein the leaving message comprises at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

12. The method according to claim 8, wherein after the receiving an indication message of first UE, the method further comprises:
stopping sending the paging message to the first UE within a preset time;
wherein the paging message is at least one of the following:
a paging message sent by the network device before receiving the indication message; or
a paging message that is indicated by the first UE and is corresponding to a paging cause that is not responded to.

13. The method according to claim 8, wherein after the receiving an indication information of first UE, the method further comprises:
obtaining an NAS feedback message through an N2 message, wherein the N2 message comprises a release indication, and the release indication is used to indicate that the network device releases an RRC connection with the first UE;
sending a response message of the indication information to the first UE according to the NAS feedback message; and releasing the RRC connection with the first UE according to the release indication.

14. The method according to claim 8, wherein after the receiving an indication information of first UE, the method further comprises:
sending an RRC connection release message, and releasing the RRC connection with the first UE.

15. A terminal, wherein the terminal comprises first UE, and the first UE comprises:
a first sending module, configured to send, in the case of determining not to respond to a paging message, an indication message, wherein the indication message is used to indicate not to respond to the paging message.

16. The terminal according to claim 15, wherein the indication message is a message comprising busy indication information or a leaving message.

17. The terminal according to claim 16, wherein the busy indication information comprises at least one of the following:
a busy indication;
a paging cause why the paging message is not responded to;
a service type for which the paging message is not responded to; and
a duration of not responding to the paging cause or service.

18. The terminal according to claim 16, wherein the leaving message comprises at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

19. The terminal according to claim 16, wherein the first sending module is configured to send a non-access stratum NAS service request message, wherein the NAS service request message comprises the busy indication information;
or send an NAS registration request message, wherein the NAS registration request message comprises the busy indication information;
or send a tracking area update TAU message, wherein the TAU message comprises the busy indication information;
or send at least one of a radio resource control RRC resume request message, an RRC resume request message 1 and an RRC resume complete message, wherein the RRC resume request message, the RRC resume request message 1 or the RRC resume complete message comprises at least one of the busy indication information and a specific value of a resume cause, and the specific value of the resume cause indicates that the first UE is busy;
or send at least one of an RRC setup request message and an RRC setup complete message, wherein the RRC setup request message or the RRC setup complete message comprises at least one of the busy indication information and a specific value of a setup cause, and the specific value of the setup cause indicates that the first UE is busy.

20. The terminal according to claim 15, further comprising:
a first processing module, configured to release an RRC connection in a case that a predetermined condition is satisfied;
wherein the predetermined condition comprises at least one of the following:
receiving a response message of the indication message;
after the indication message is sent, receiving an RRC connection release message;
after the indication message is sent, receiving an acknowledgment ACK response of a radio link control RLC layer corresponding to the indication message;
after the indication message is sent and the ACK response of the RLC layer corresponding to the indication message is received, starting a timer, wherein the timer times out; and
when the indication message is sent or the indication message is delivered to a lower layer of the RRC, starting a timer, wherein the timer times out.

21. The terminal according to claim 15, further comprising:
a determining module, configured to determine, before the first sending module sends the indication message in the case of determining not to respond to the paging message, whether to respond to the paging message according to at least one of an ongoing service and a paging cause.

22. A terminal, comprising a memory, a processor, and a computer program stored in the memory and executable on the processor, wherein when the computer program is executed by the processor, steps of the paging response method according to any one of claims 1 to 7 are implemented.

23. A network device, comprising:
a receiving module, configured to receive an indication message of first UE, wherein the indication message is used to indicate not to respond to a paging message.

24. The network device according to claim 23, wherein the indication message is a message comprising busy indication information or a leaving message.

25. The network device according to claim 24, wherein the busy indication information comprises at least one of the following:
a busy indication;
a paging cause why the paging message is not responded to;
a service type for which the paging message is not responded to; and
a duration of not responding to the paging cause or service.

26. The network device according to claim 24, wherein the leaving message comprises at least one of the following:
a busy indication;
a paging cause why the paging message is not responded to;
a service type for which the paging message is not responded to;
a duration of not responding to the paging cause or service;
a leaving cause;
a service type being executed;
a leaving duration; and
an identifier of the first UE.

27. The network device according to claim 23, further comprising:
a second processing module, configured to stop sending the paging message to the first UE within a preset time after the receiving module receives the indication message of the first UE;
wherein the paging message is at least one of the following:
a paging message sent by the network device before receiving the indication message; or
a paging message that is indicated by the first UE and is corresponding to a paging cause that is not responded to.

28. The network device according to claim 23, further comprising:
an obtaining module, configured to obtain, after the receiving module receives the indication message of the first UE, an NAS feedback message through an N2 message, wherein the N2 message comprises a release indication, and the release indication is used to indicate that the network device releases an RRC connection with the first UE; and
a second processing module, configured to send a response message of the indication message to the first UE according to the NAS feedback message, and release the RRC connection with the first UE according to the release indication.

29. The network device according to claim 23, further comprising:
a second sending module, configured to send, after the receiving module receives the indication message of the first UE, an RRC connection release message, and release the RRC connection with the first UE.

30. A network device, comprising a memory, a processor, and a computer program stored in the memory and executable on the processor, wherein when the computer program is executed by the processor, steps of the paging response method according to any one of claims 8 to 14 are implemented.

31. A computer-readable storage medium, wherein the computer-readable storage medium stores a computer program, and when the computer program is executed by a processor, steps of the paging response method according to any one of claims 1 to 7 or steps of the paging response method according to any one of claims 8 to 14 are implemented.

32. A computer program product, wherein the computer program product is executed by at least one processor to implement steps of the paging response method according to any one of claims 1 to 7 or steps of the paging response method according to any one of claims 8 to 14.

33. A terminal, configured to implement the paging response method according to any one of claims 1 to 7.

34. A network device, configured to implement the paging response method according to any one of claims 8 to 14.
